# EUROPÄISCHE PATENTSCHRIFT

(11) **EP 0 955 122 B1**
(45) Veröffentlichungstag und Bekanntmachung des Hinweises auf die Patenterteilung: **10.07.2002**
(21) Anmeldenummer: 99106291.0
(22) Anmeldetag: 16.04.1999
(51) Int. Cl.: B23K 33/00

(54) **Anordnung zur Verbindung eines Leichtmetallbauteils mit einem Stahlbauteil und Verfahren zur Herstellung der Anordnung**
Arrangement for connecting a light metal component to a steel component and method for manufacturing the arrangement
Agencement pour joindre une pièce en alliage léger à une pièce en acier et procédé de fabrication de l'agencement

(30) Priorität: 07.05.1998 DE 19820394
(43) Veröffentlichungstag der Anmeldung: 10.11.1999
(73) Patentinhaber: Volkswagen Aktiengesellschaft, 38436 Wolfsburg (DE)
(72) Erfinder: Seel, Werner, 38543 Hillerse (DE); Thürnau, Frank, 31535 Neustadt (DE); Hoffmann, Uwe, 38165 Flechtorf (DE)

(56) Entgegenhaltungen:
- DE-C- 4 240 822
- DE-C- 4 240 823
- US-A- 4 119 827
- US-A- 5 655 792

## Beschreibung

Die vorliegende Erfindung betrifft eine Anordnung zur Verbindung eines Leichtmetallbauteils mit einem Stahlbauteil unter Zuhilfenahme eines sich teilweise zwischen diesen beiden erstreckenden Zusatzteils, das mit einem der beiden Bauteile verschweißt und an dem anderen der beiden Bauteile über geeignete Verbindungsmittel befestigt ist, sowie ein Verfahren zur Herstellung der Anordnung.

Ein wesentlicher Parameter insbesondere für Fahrleistung und Kraftstoffverbrauch eines Kraftfahrzeugs ist dessen Gesamtgewicht. Daher wird im Kraftfahrzeugbau seit einiger Zeit auf konsequente Leichtbauweise gesetzt, wobei neben der geometrischen Gestaltung einzelner Konstruktionselemente auch durch eine geeignete Materialauswahl ein günstiges Festigkeits-/Gewichtsverhältnis erreicht werden kann.

Aus den genannten Gründen finden zunehmend Leichtmetallteile - insbesondere aus Aluminuim, Magnesium und/oder deren Legierungen - im Kraftfahrzeugbau Verwendung, da sich damit eine deutliche Gewichtsreduzierung gegenüber der Verwendung von Stahlteilen erzielen läßt, ohne größere Nachteile bei der formgebenden und umformenden Bearbeitung in Kauf nehmen zu müssen.

Fahrzeugkarosserien werden in der Regel aus Gründen der Festigkeit aber insbesondere aus Wirtschaftlichkeitsüberlegungen nicht vollständig in Leichtmetall gefertigt, so daß in vielen Fällen Stahlblech mit Leichtmetall zu verbinden ist. Neben reibschlüssigen Schraubund Nietverbindungen ist es gerade bei großflächigen Blechteilen wünchenswert, diese zu verschweißen, da letzteres Verfahren kostengünstig voll- oder teilautomatisiert werden kann und zu Verbindungen mit hoher Festigkeit führt.

Stand der Technik ist, Aluminiumblech am Rand mit Stahlblech zu versehen, so daß das gesamte Bauteil in üblicher Weise zum Beispiel punktverschweißt werden kann.

Aus der DE 42 40 822 C1, die eine Anordnung der eingangs genannten Art beschreibt, ist bekannt, ein flächiges Aluminiumbauteil am Rand mit einem U-förmigen Stahlblechprofil zu verkleben, beziehungsweise einen Stahlblechstreifen mit dem Aluminiumbauteil zu verfalzen und innerhalb der Falz zusätzlich zu verkleben. Das so in seinem Randbereich mit Stahlblech versehene Aluminiumbauteil kann nun in bekannter Weise mit Stahlblechteilen verschweißt, zum Beispiel punktverschweißt werden.

Nachteilig an der zuvor beschriebenen Anordnung ist, daß das Aluminiumbauteil in seinem Randbereich starr mit einem Material mit anderen Werkstoffkennwerten verbunden ist, wodurch zum Beispiel Oberflächenbehandlungen wie eine kathodische Tauchbadlackierung (KTL), bei denen eine Erhitzung des Bauteils notwendig ist, zu einem Verziehen des Bauteils führen können. Betriebsbedingte Spannungen zwischen Aluminiumbauteil und Stahlbauteil führen bei der zuvor beschriebenen Lösung aufgrund der größeren Steifigkeit von Stahl gegenüber Aluminium zu Verformungen des Aluminiumbauteils, wobei diese insbesondere bei wenig verwindungssteifen großflächigen Bauteilen, z.B. Kraftfahrzeugdächern, zu gut sichtbaren und daher aus Gründen der Ästhetik unerwünschten Effekten führen.

Schließlich wird durch die US-A-5655792 zur Verhinderung einer galvanischen Korrosion zwischen Bauteilen unterschiedlicher Metalle, hier die Verbindung zwischen Eisen und Aluminium, die Verwendung eines Zusatzteils und eines Verbindungsmittels offenbart, wobei das Zusatzteil und das Verbindungsmittel, ein sogenanntes Bi-metall bildend, miteinander fest verbunden sind. Im Wesentlichen wird das Bi-metall, respektive der Eisenteil desselben mit einem Stahlbauteil durch Schweißen verbunden. Ferner wird vorgeschlagen den Aluminiumteil des Bi-metalls entweder durch Schweißen oder mittels mechanischer Verbindungsmittel mit einem Aluminiumbauteil zu verbinden. Als nachteilig ist jedoch herauszustellen, daß insbesondere durch die Verschweißung des Eisenteils des Bi-metalls mit dem Stahlbauteil hohe Temperaturen in die Gesamtkonstruktionen eingeleitet werden, die ihrerseits zu den bereits oben beschriebenen Spannungen und demzufolge zu nachteiligen Verformungen des Aluminiumbauteils führen, die es gerade im Kraftfahrzeugbau zu vermeiden gilt.

Das der Erfindung zugrunde liegende Problem ist es, eine Anordnung zur Verbindung zwischen einem Leichtmetallbauteil und einem Stahlbauteil der eingangs genannten Art bereitzustellen, bei der unerwünschte Verformungen des Leichtmetallbauteils zumindest weitgehend vermeidbar sind.

Diese Aufgabe wird erfindungsgemäß dadurch gelöst, daß das Zusatzteil aus Leichtmetall oder einer Leichtmetalllegierung besteht, mit dem Leichtmetallbauteil verschweißt und mit dem Stahlbauteil durch ein adhäsiv wirkendes Verbindungsmittel in Form eines Klebstoffes verbunden ist, wobei das Zusatzteil mit dem Stahlbauteil zusätzlich mittels an sich bekannter mechanisch wirkender Verbindungsmittel, wie Nieten, Schrauben oder Clinch-Verbindungen, verbunden ist, welche ihrerseits durch miteinander korrespondierende Langlöcher im Zusatzteil sowie in einer äußeren und inneren Aufnahmezunge des Stahlbauteils geführt sind.

Insbesondere kann bei Wahl eines geeigneten Abstandes zwischen der Schweißnaht zur Verbindung beider Leichtmetallteile, in der Regel ein Vielfaches der Materialstärke der zu verbindenden Bauteile, und dem bzw. den Verbindungsmitteln zwischen Zusatzteil und Stahlbauteil erreicht werden, daß Spannungsverformungen zumindest im wesentlichen nur in dem Zusatzteil auftreten.

Die Verbindung des Zusatzteils mit dem Stahlbauteil erfolgt durch Verkleben in Verbindung mit Verschrauben, hier wiederum bevorzugt durch Blindnietschrauben, ebenso sind jedoch alternativ oder zusätzlich auch andere reib- oder forrnschlüssige Verbindungen möglich, wie zum Beispiel Vernieten und/oder Verclinchen (Durchsetzfügen, Druckfügen). Durch die Wahl des Verbindungsmittels zwischen Zusatzteil und Stahlbauteil können die statischen und dynamischen Eigenschaften der Fügestelle in weiten Bereichen variiert werden, wobei insbesondere durch die Wahl des Klebemittels die unterschiedlichen thermischen Ausdehnungskoeffizienten von Zusatzteil und Stahlbauteil berücksichtigt werden können. Die erfindungsgemäße Anordnung eignet sich insbesondere zum Verbinden großflächiger Leichtmetallbauteile, insbesondere wenn diese in ihrer Formgebung von einem flachen Blech abweichen, mit einer Stahlkonstruktion, wie dies zum Beispiel bei der Verbindung eines Leichtmetall-Formdachs einer Fahrzeugkarosserie mit einem Seitenteil der Fahrzeugkarosserie, die in der Regel aus Stahlblech gefertigt ist, der Fall ist.

Bei dem Verschweißen des Leichtmetallbauteils mit dem Zusatzteil gelangt vorzugsweise ein Laser-Schweißverfahren zum Einsatz. Durch die hohe örtliche Energiedichte bei der Herstellung der Laser-Schweißnaht kann die Temperatureinflußzone der Schweißnaht gering gehalten werden, wodurch das Stahlbauteil nicht oder zumindest kaum in Mitleidenschaft gezogen wird.

Weiterhin ist es vorteilhaft, die Verbindungsstelle zusätzlich mit einer Dichtungsmasse gegen Korrosion zu schützen und zu versiegeln. Die Dichtungsmasse kann zusätzlich als Klebstoff wirken, bzw. ein Klebstoff kann zusätzlich eine Abdichtungsfunktion ausüben.

Ein Verfahren zur Herstellung der erfindungsgemäßen Anordnung wird vorteilhaft in den Verfahrensschritten Verschweißen des Leichtmetallbauteils mit dem Zusatzteil (eventuell mit zusätzlichem Verkleben), danach Verkleben sowie Vemieten, Verschrauben und/oder Verclinchen (Durchsetzfügen, Druckfügen) des Zusatzteils mit dem Stahlbauteil durchgeführt.

Es ist natürlich auch möglich, zuerst das Zusatzteil mit dem Stahlbauteil zu verkleben sowie zu vernieten, verschrauben und/oder zu verclinchen und anschließend das Leichtmetallbauteil mit dem Zusatzteil zu verschweißen (eventuell mit zusätzlicher Verklebung als sogenannte Schweißklebung).

Die erfindungsgemäße Anordnung und das erfindungsgemäße Verfahren eignen sich für alle Fälle, in denen Leichtmetall (zum Beispiel Aluminium, Magnesium und/oder deren Legierungen) mit Stahl zu verbinden ist, sind aber besonders vorteilhaft bei der Verbindung von großflächigen Leichtmetallbauteilen geringer Stärke mit Stahlbauteilen.

Im folgenden wird ein Ausführungsbeispiel der Erfindung unter Bezugnahme auf die beiliegende Zeichnung näher beschrieben.

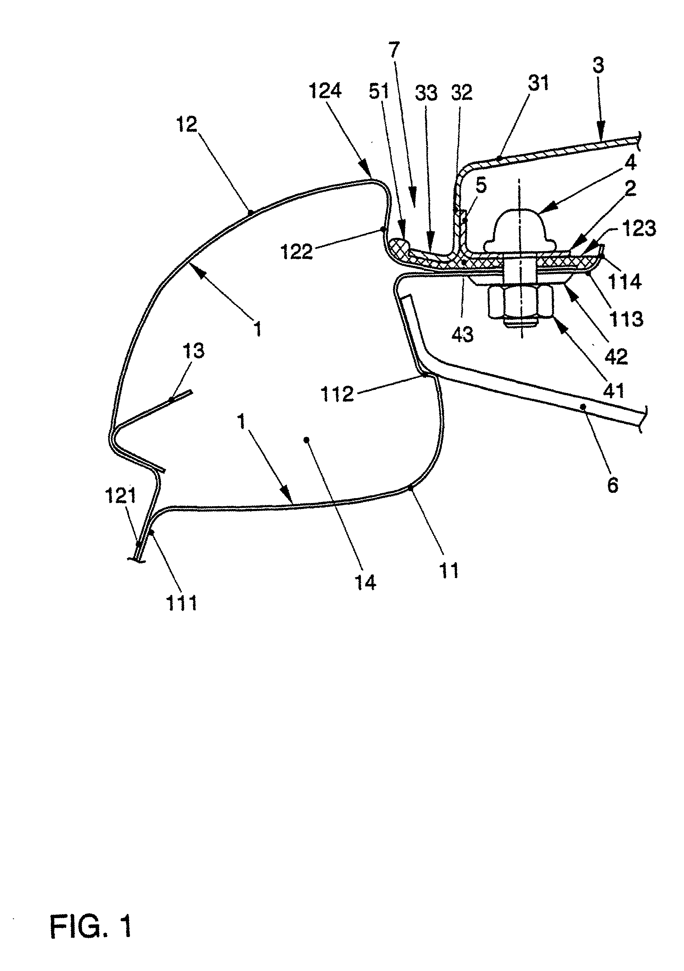

Fig. 1 zeigt dabei einen Querschnitt durch einen oberen Abschnitt eines Stahl-Seitenteils einer Fahrzeugkarosserie im Bereich des Übergangs vom Seitenteil zum Dach.

Das abgebildete Ausführungsbeispiel eines oberen Abschnitts eines Seitenteils 1 einer PKW-Karosserie besteht aus einem inneren Seitenprofilblech 11 aus Stahlblech sowie einem äußeren Seitenprofilblech 12 aus Stahlblech. inneres und äußeres Seitenprofilblech 11, 12 bilden im in Fig. 1 gezeigten Bereich des Übergangs vom Seitenteil 1 ins Fahrzeugdach 3 zusammen einen rohrartigen Hohlkörper 14 zur Verbesserung der Biegesteifigkeit in Fahrzeugquerrichtung. Das äußere Seitenprofilblech 12 kann an seiner Innenseite im Bereich eines etwa 90° nach außen hin verlaufenden Blechabschnitts eine Verstärkungseinlage 13 aufweisen. Das innere Seitenprofilblech 11 besitzt einen unteren Verbindungsbereich 111 mit der dieses z.B. punktverschweißt ist mit einem unteren Verbindungsbereich 121 des äußeren Seitenprofilblechs 12. Das innere Seitenprofilblech 11 verläuft von dem unteren Verbindungsbereich 111 im wesentlichen ausgebeult zum Fahrzeuginneren hin zu einem zweiten Verbindungsbereich 113 mit dem äußeren Seitenprofilblech 12, welches im wesentlichen zum Fahrzeugäußeren hin ausgebeult ist. Das innere Seitenprofilblech 11 verläuft von dem Verbindungsbereich 111 etwa waagerecht in Richtung auf das Fahrzeuginnere, knickt sodann in etwa senkrecht nach oben ab, um wiederum ungefähr waagerecht als innere Dachaufnahmezunge 113 zum Fahrzeuginneren hin zu verlaufen. In dem etwa senkrecht nach oben verlaufenden Blechabschnitt ist eine Formhimmelaufnahme 112 als nutähnliche Vertiefung eingelassen.

Das äußere Seitenprofilblech 12 knickt oberhalb des unteren Verbindungsbereichs 121 mit dem inneren Seitenprofilblech 11 in etwa rechtwinklig nach außen hin verlaufend ab, um sodann etwa rechtwinklig zur Dachoberseite hin abzuknicken und in einem im wesentlichen viertelkreisförmigen Bogen in Richtung auf die Fahrzeuginnenseite zu verlaufen. Am Ende dieses Bogens ist das äußere Seitenprofilblech 12 nach unten in Richtung auf die Fahrzeughimmelaufnahme 112 des inneren Seitenprofilblechs 11 umgebogen. Das Seitenteil 1 bildet hier in Einbaulage eine obere Seitenteilkante 124 als Oberkante der gesamten Baugruppe. Eine durch die Abbiegung nach unten gebildete, in etwa senkrecht nach unten verlaufende Blechzunge 122 knickt auf Höhe der unteren Dachaufnahmezunge 113 parallel zu dieser ab und liegt als obere Dachaufnahmezunge 123 teilweise flächig in Fahrzeuglängsrichtung an dieser an. Die innere Dachaufnahmezunge 113 überragt die äußere Dachaufnahmezunge 123 in Richtung zum Fahrzeuginneren, wobei der überstehende Blechteil nach oben hin als Dichtnase 114 abgebogen ist.

Durch die äußere und innere Dachaufnahmezunge 113, 123 des Seitenteils 1 sind mehrere in Fahrzeuglängsrichtung angeordnete Langlöcher eingebracht, vorzugsweise eingestanzt. Ein Leichtmetalldach 3 aus Aluminiumblech bestehend aus einer Dachoberfläche 31 sowie einem an den Seitenrändem senkrecht nach unten gezogenem Haltesteg 32, welcher an seinem unteren Bereich nach außen hin als Befestigungsflansch 33 abgeknickt ist, ist mit dem Seitenteil 1 im Bereich der äußeren Dachaufnahmezunge 123 verbunden. An der Innenseite des Haltestegs 32 ist ein in etwa L-förmig gebogenes Zusatzteil 2 aus Aluminiumblech angeordnet, welches einen parallel zu dem Haltesteg 32 verlaufenden und mit diesem verbundenen Schenkel und einen parallel zu der äußeren Dachaufnahmezunge 123 nach innen verlaufenden und mit dieser verbundenen Schenkel umfaßt. Das Zusatzteil 2 ist mit dem Leichtmetalldach 3 vorzugsweise verschweißt (eventuell unter zusätzlicher Verklebung als sogenannte Schweißklebung), wobei hier vorteilhaft eine Laser- oder Elektronenstrahlschweißnaht 5 den Haltesteg 32 mit dem parallel zu diesem angeordneten Schenkel des Zusatzteils 2 verbindet.

Der parallel zur äußeren Dachaufnahmezunge 123 verlaufende Schenkel des Zusatzteils 2 ist ebenfalls mit Langlöchem versehen, deren Größe, Orientierung, Lage und Abstand an die in das Seitenteil 1 eingebrachten Langlöcher angepaßt ist.

Zwischen dem etwa parallel zur Dachaufnahmezunge 123 verlaufenden Schenkel des Zusatzteils 2 beziehungsweise dem Befestigungsflansch 33 und der äußeren Dachaufnahmezunge 123 ist zusätzlich eine Klebeschicht 43 als Verbindungsmittel, Dichtmittel und/oder elektrischer Isolator eingebracht. Die Schiebbarkeit für Wärmeausdehnung sowie die Festigkeitssteifigkeit der Klebeschicht 43 sind an die Werkstoffeigenschaften von Leichtmetall angepaßt.

Durch die Langlöcher sind Blindnietschrauben geführt 4, deren Nietkopf zwischen dem Zusatzteil 2 und dem Leichtmetalldach 3 angeordnet ist, und deren Schaft mit einer vorteilhaft selbstsichernden Mutter 41 sich mittels einer Tellerfeder 42 an der inneren Dachaufnahmezunge 113 abstützt.

Eine Dichtungswulst 51, zum Beispiel aus einer handelsüblichen plastisch verformbaren und teilweise aushärtbaren Dichtmasse, kann den äußeren Rand der Verbindung zwischen Befestigungsflansch 33 und äußerer Dachaufnahmezunge 123 vor Korrosion schützen.

Die senkrechte Blechzunge 122 des äußeren Seitenprofilblechs 12 sowie der Haltesteg 32 des Leichtmetalldachs 3 sind in ihren Dimensionierungen so ausgelegt, daß ein optisch glatter Übergang vom äußeren Seitenprofilblech 12 zur Dachoberfläche 31 vorhanden ist. Die mit Abstand zueinander verlaufenden senkrechte Blechzunge 122 und Haltesteg 32 bilden zusammen mit dem Befestigungsflansch 33 bzw. der äußeren Dachaufnahmezunge 123 eine U-förmige Dachnut 7, die zum Beispiel durch eine Zierleiste abgedeckt werden kann.

Ein Formhimmel 6 ist in bekannter Art und Weise zwischen den Seitenteilen 1 beider Fahrzeugseiten eingeklemmt, wobei die Formhimmelaufnahme 112 für eine sichere Befestigung sorgt.

Zur Fertigung werden zunächst das innere Seitenprofilblech 11, das äußere Seitenprofilblech 12 sowie die Verstärkungseinlage 13 miteinander verschweißt (eventuell unter zusätzlicher Klebung); die Langlöcher wurden vorteilhaft beim Stanzen und/oder Tiefziehen der Seitenprofilbleche 11 und 12 eingebracht. Das zum Beispiel durch Tiefziehen hergestellte Leichtmetalldach 3 wird an seiner Innenseite mit dem Zusatzteil 2 verschweißt (eventuell unter zusätzlicher Klebung). Nach Einbau des Seitenteils 1 in die Karosserie wird die äußere Dachaufnahmezunge 123 mit der Klebeschicht 43 versehen, danach wird das Leichtmetalldach 3 aufgesetzt. Die Blindnietschrauben 4 werden von der Unterseite her in die korrespondierenden Langlöcher der äußeren und inneren Dachaufnahmezunge 113; 123 des Stahlbautels 1 (Seitenteil) sowie des Zusatzteils 2 eingesetzt und abgezogen. Die Verwendung von Blindnietschrauben 4 ermöglicht ein eventuelles Abnehmen. des Leichtmetalldachs 3 zum Beispiel nach einem Unfallschaden, ohne unlösbare Verbindungen wie zum Beispiel Schweißverbindungen oder Nietverbindungen zerstörend trennen zu müssen.

Eine katodische Tauchbadlackierung (KTL) kann entweder nach vollständiger Montage des Leichtmetalldachs 3 erfolgen, oder aber die Einzelteile werden vor Montage des Leichtmetalldachs 3 tauchbadlackiert.

## Patentansprüche

1. Anordnung zur Verbindung eines Leichtmetallbauteils (3) mit einem Stahlbauteil (1) unter Zuhilfenahme eines sich teilweise zwischen diesen beiden erstreckenden Zusatzteils (2), das mit einem der beiden Bauteile (1, 3) verschweißt und an dem anderen der beiden Bauteile (1, 3) über Verbindungsmittel (4) befestigt ist,
**dadurch gekennzeichnet, dass**
das Zusatzteil (2) aus Leichtmetall oder einer Leichtmetalllegierung besteht, mit dem Leichtmetallbauteil (3) verschweißt und mit dem Stahlbauteil (1) durch ein adhäsiv wirkendes Verbindungsmittel (43) in Form eines Klebstoffes verbunden ist, wobei das Zusatzteil (2) mit dem Stahlbauteil (1) zusätzlich mittels an sich bekannter mechanisch wirkender Verbindungsmittel (4), wie Nieten, Schrauben oder Clinch-Verbindungen, verbunden ist, welche ihrerseits durch miteinander korrespondierende Langlöcher im Zusatzteil (2) sowie in einer äußeren und inneren Aufnahmezunge des Stahlbauteils (1) geführt sind.

2. Anordnung nach Anspruch 1, **dadurch gekennzeichnet, dass** der Abstand zwischen Schweißnaht (5) und mechanischen Verbindungsmittel (4) ein Vielfaches der Stärke des Zusatzteils (2) beträgt.

3. Anordnung nach Anspruch 1, **dadurch gekennzeichnet, dass** als mechanische Verbindungsmittel (4) in Anwendung gebrachte Schrauben als Blindnietschrauben ausgeführt sind.

4. Anordnung nach einem der vorhergehenden Ansprüche, **dadurch gekennzeichnet, dass** das verwendete adhäsiv wirkende Verbindungsmittel (43) in Form eines Klebstoffes vorzugsweise ein Klebstoff der Marken AMV 167 oder Sieker Power 430, oder ein Scheibenkleber ist.

5. Anordnung nach einem der vorhergehenden Ansprüche, **dadurch gekennzeichnet, dass** das Leichtmetallbauteil (3) ein Kraftfahrzeug-Formdach ist.

6. Anordnung nach einem der vorhergehenden Ansprüche, **dadurch gekennzeichnet, dass** das Stahlbauteil (1) ein Seitenteil eines Kraftfahrzeugs ist.

7. Anordnung nach einem der vorhergehenden Ansprüche, **dadurch gekennzeichnet, dass** das Zusatzteil (2) mit dem Leichtmetallbauteil (3) mittels einer Laser-Schweißnaht (5) verschweißt ist.

8. Anordnung nach einem der Ansprüche 6 oder 7 in Kombination mit Anspruch 5, **dadurch gekennzeichnet, dass** das Zusatzteil (2) als L-förmiges, sich in Fahrzeuglängsrichtung erstreckendes Blech ausgeführt ist.

9. Anordnung nach Anspruch 8, **dadurch gekennzeichnet, dass** das als L-förmiges Blech ausgeführte Zusatzteil (2) einen sich zumindest im wesentlichen horizontal in Fahrzeugquerrichtung erstreckenden Schenkel und einen sich von diesem zumindest im wesentlichen senkrecht nach oben erstreckenden Schenkel umfaßt.

10. Anordnung nach Anspruch 9 in Kombination mit Anspruch 6, **dadurch gekennzeichnet, dass** das als Seitenteil ausgeführte Stahlbauteil (1) eine sich in Fahrzeugquerrichtung erstreckende äußere Dachaufnahmezunge (123) aufweist, an der der zumindest im wesentlichen in Fahrzeugquerrrichtung horizontal erstreckende Schenkel des Zusatzteils (2) zumindest teilweise anliegt, wobei die Verbindung zwischen Zusatzteil (2) und Stahlbauteil (1) vorzugsweise im Anlagebereich von oberer Dachaufnahmezunge (123) und daran anliegendem Schenkel des Zusatzteils (2) realisiert ist.

11. Anordnung nach einem der Ansprüche 9 oder 10, **dadurch gekennzeichnet, dass** das als Kraftfahrzeug Formdach ausgeführte Leichtmetallbauteil (3) einen sich zumindest im wesentlichen senkrecht nach unten erstreckenden Haltesteg (32) aufweist, an dem der sich zumindest im wesentlichen senkrecht nach oben erstreckende Schenkel des Zusatzteils (2) zumindest abschnittsweise anliegt. wobei die Schweißverbindung zwischen Zusatzteil (2) und Leichtmetallbauteil (3) vorzugsweise im Anlagebereich von Haltesteg (32) und daran anliegendem Schenkel des Zusatzteils (2) realisiert ist.

12. Anordnung nach einem der vorhergehenden Ansprüche, **dadurch gekennzeichnet, dass** das Zusatzteil (2) mit dem Leichtmetallbauteil (3) zusätzlich flächig verklebt ist.

13. Anordnung nach einem der vorhergehenden Ansprüche, **dadurch gekennzeichnet, dass** Verbindungsfugen zwischen Stahlbauteil (1) und Leichtmetallbauteil (3) mit einer Dichtungsmasse versiegelt sind.

14. Verfahren zur Herstellung einer Anordnung nach einem der Ansprüche 1 bis 13, **gekennzeichnet, durch** folgende Verfahrensschritte:
- das Leichtmetallbauteil (3) wird mit dem Zusatzteil (2) verschweißt;
- sodann wird das Stahlbauteil (1) mit dem Zusatzteil (2) **durch** Verkleben sowie Vemieten, Verschrauben und/oder Verclinchen verbunden.

15. Verfahren nach Anspruch 14, **dadurch gekennzeichnet, dass** das Leichtmetallbauteil (3) mit dem Zusatzteil (2) verklebt wird.

## Claims

1. Arrangement for connecting a light-metal component (3) to a steel component (1) with the aid of an additional part (2) which extends partially between these two and which is welded to one of the two components (1, 3) and is fastened to the other of the two components (1, 3) via connection means (4), **characterized in that** the additional part (2) consists of light metal or of a light-metal alloy, is welded to the light-metal component (3) and is connected to the steel component (1) by an adhesively acting connection means (43) in the form of a glue, the additional part (2) being connected to the steel component (1) additionally by mechanically acting connection means (4) known per se, such as rivets, screws or clinch connections, which are themselves led through mutually corresponding long holes in the additional part (2) and in an outer and inner receiving tongue of the steel component (1).

2. Arrangement according to Claim 1, **characterized in that** the distance between the weld seam (5) and the mechanical connection means (4) is a multiple of the thickness of the additional part (2).

3. Arrangement according to Claim 1, **characterized in that** screws used as mechanical connection means (4) are designed as blind-rivet screws.

4. Arrangement according to one of the preceding claims, **characterized in that** the adhesively acting connection means (43) used, in the form of a glue, is preferably a glue of the trade marks AMV 167 or Sieker Power 430 or is a window-pane glue.

5. Arrangement according to one of the preceding claims, **characterized in that** the light-metal component (3) is a motor vehicle moulded roof.

6. Arrangement according to one of the preceding claims, **characterized in that** the steel component (1) is a side part of a motor vehicle.

7. Arrangement according to one of the preceding claims, **characterized in that** the additional part (2) is welded to the light-metal component (3) by means of a laser-weld seam (5).

8. Arrangement according to one of Claims 6 and 7 in combination with Claim 5, **characterized in that** the additional part (2) is designed as an L-shaped metal sheet extending in the vehicle longitudinal direction.

9. Arrangement according to Claim 8, **characterized in that** the additional part (2) designed as an L-shaped metal sheet comprises a leg extending at least essentially horizontally in the vehicle transverse direction and a leg extending from the latter at least essentially vertically upwards.

10. Arrangement according to Claim 9, in combination with Claim 6, **characterized in that** the steel component (1) designed as a side part has an outer roof receiving tongue (123) which extends in the vehicle transverse direction and on which that leg of the additional part (2) which extends at least essentially horizontally in the vehicle transverse direction comes to bear at least partially, the connection between the additional part (2) and the steel component (1) being made preferably in the bearing region of the upper roof receiving tongue (123) and of that leg of the additional part (2) which comes to bear on the latter.

11. Arrangement according to one of Claims 9 and 10, **characterized in that** the light-metal component (3) designed as a motor vehicle moulded roof has a holding web (32) which extends at least essentially vertically downwards and on which that leg of the additional part (2) which extends at least essentially vertically upwards comes to bear at least in portions, the welded connection between the additional part (2) and the light-metal component (3) being made preferably in the bearing region of the holding web (32) and of that leg of the additional part (2) which comes to bear on the latter.

12. Arrangement according to one of the preceding claims, **characterized in that** the additional part (2) is additionally glued over its area to the light-metal component (3).

13. Arrangement according to one of the preceding claims, **characterized in that** connection gaps between the steel component (1) and the light-metal component (3) are filled with a sealing component.

14. Method for producing an arrangement according to one of Claims 1 to 13, **characterized by** the following method steps:
- the light-metal component (3) is welded to the additional part (2);
- then, the steel component (1) is connected to the additional part (2) by gluing and also riveting, screwing and/or clinching.

15. Method according to Claim 14, **characterized in that** the light-metal component (3) is glued to the additional part (2).

## Revendications

1. Agencement pour joindre une pièce en métal léger (3) à une pièce en acier (1) à l'aide d'une pièce additionnelle (2) qui s'étend en partie entre ces deux pièces, qui est soudée à une des deux pièces (1, 3) et qui est fixée à l'autre des deux pièces (1, 3) par des moyens d'assemblage (4), **caractérisé en ce que** la pièce additionnelle (2) est constituée d'un métal léger ou d'un alliage de métal léger, est soudée à la pièce en métal léger (3) et est assemblée à la pièce en acier (1) par un moyen d'assemblage agissant par adhérence (43) sous la forme d'un adhésif, dans lequel la pièce additionnelle (2) est en outre assemblée à la pièce en acier (1) au moyen de moyens d'assemblage agissant mécaniquement connus en soi (4), comme des rivets, des vis ou des assemblages clinch, qui sont à leur tour posés à travers des trous allongés se correspondant mutuellement dans la pièce additionnelle (2) ainsi que dans une patte de réception extérieure et intérieure de la pièce en acier (1).

2. Agencement suivant la revendication 1, **caractérisé en ce que** la distance entre la soudure (5) et les moyens d'assemblage mécaniques (4) vaut un multiple de l'épaisseur de la pièce additionnelle (2).

3. Agencement suivant la revendication 1, **caractérisé en ce qu'**en guise de moyens d'assemblage mécaniques (4), on emploie des vis sous forme de rivets à visser borgnes.

4. Agencement suivant l'une quelconque des revendications précédentes, **caractérisé en ce que** le moyen d'assemblage agissant par adhérence utilisé (43) sous la forme d'un adhésif est de préférence un adhésif des marques AMV 167 ou Sieker Power 430, ou une colle pour vitres.

5. Agencement suivant l'une quelconque des revendications précédentes, **caractérisé en ce que** la pièce en métal léger (3) est un toit profilé de véhicule.

6. Agencement suivant l'une quelconque des revendications précédentes, **caractérisé en ce que** la pièce en acier (1) est une pièce latérale d'un véhicule.

7. Agencement suivant l'une quelconque des revendications précédentes, **caractérisé en ce que** la pièce additionnelle (2) est soudée à la pièce en métal léger (3) au moyen d'une soudure au laser (5).

8. Agencement suivant l'une ou l'autre des revendications 6 ou 7 en combinaison avec la revendication 5, **caractérisé en ce que** la pièce additionnelle (2) est constituée par une tôle en forme de L s'étendant dans le sens longitudinal du véhicule.

9. Agencement suivant la revendication 8, **caractérisé en ce que** la pièce additionnelle (2) constituée par une tôle en forme de L comprend une aile s'étendant au moins sensiblement à l'horizontale dans le sens transversal du véhicule et une aile s'étendant vers le haut au moins sensiblement verticalement à partir de celle-ci.

10. Agencement suivant la revendication 9 en combinaison avec la revendication 6, **caractérisé en ce que** la pièce en acier (1) constituant une pièce latérale présente une patte extérieure de réception de toit (123) s'étendant dans le sens transversal du véhicule, sur laquelle s'applique au moins en partie l'aile de la pièce additionnelle (2) qui s'étend à l'horizontale au moins sensiblement dans le sens transversal du véhicule, l'assemblage entre la pièce additionnelle (2) et la pièce en acier (1) étant réalisé de préférence dans la zone de contact de la patte supérieure de réception du toit (123) et de l'aile de la pièce additionnelle (2) appliquée sur celle-ci.

11. Agencement suivant l'une ou l'autre des revendications 9 ou 10, **caractérisé en ce que** la pièce en métal léger (3) constituant un toit profilé de véhicule présente une nervure de fixation (32) s'étendant au moins sensiblement verticalement vers le bas, sur laquelle s'applique au moins en partie l'aile de la pièce additionnelle (2) qui s'étend au moins sensiblement verticalement vers le haut, l'assemblage soudé entre la pièce additionnelle (2) et la pièce en métal léger (3) étant réalisé de préférence dans la zone de contact entre la nervure de fixation (32) et l'aile de la pièce additionnelle (2) appliquée sur celle-ci.

12. Agencement suivant l'une quelconque des revendications précédentes, **caractérisé en ce que** la pièce additionnelle (2) est en outre collée à plat à la pièce en métal léger (3).

13. Agencement suivant l'une quelconque des revendications précédentes, **caractérisé en ce que** les joints d'assemblage entre la pièce en acier (1) et la pièce en métal léger (3) sont scellés par une masse d'étanchéité.

14. Procédé pour la fabrication d'un agencement suivant l'une quelconque des revendications 1 à 13, **caractérisé par** les étapes de procédé suivantes:
- la pièce en métal léger (3) est soudée à la pièce additionnelle (2);
- ensuite, la pièce en acier (1) est assemblée à la pièce additionnelle (2) par collage ainsi que par rivetage, vissage et/ou clinchage.

15. Procédé suivant la revendication 14, **caractérisé en ce que** la pièce en métal léger (3) est collée à la pièce additionnelle (2).
